# EUROPEAN PATENT APPLICATION

(11) **EP 4 530 110 A1**
(43) Date of publication of application: **02.04.2025**
(21) Application number: 24203042.7
(22) Date of filing: 26.09.2024
(51) Int. Cl.: B60K 15/03, B60K 15/07

(54) **TRUCK WITH A VESSEL MOUNT STRUCTURE FOR SUSPENDING A PRESSURIZED FUEL TANK**

(30) Priority: 26.09.2023 NL 2035888; 30.05.2024 NL 2037819; 30.08.2024 NL 2038538; 30.08.2024 NL 2038544
(71) Applicant: DAF Trucks N.V., 5643 TW Eindhoven (NL)
(72) Inventor: VAN DER KNAAP, Albertus Clemens Maria, 5643 TW Eindhoven (NL); WEIJENBORG, Bernardus Johannes Maria, 5643 TW Eindhoven (NL); SCHELLEKENS, Josephus Cornelis Maria, 5643 TW Eindhoven (NL)
(74) Representative: V.O.

(57) **Abstract**

A truck comprises a vessel mount structure providing at least one neck mount that is mounted to an axial end of an elongated pressure vessel. The vessel mount structure comprises a support arm that is coupled to the or each neck mount by a coupling arrangement that is deformable in a lateral direction for guiding a movement of the respective neck mount relative to the support arm along a predefined trajectory. An end stop is provided on the chassis and spaced from the elongated pressure vessel. In case of an impact on the elongated pressure vessel, the coupling arrangement guides the elongated pressure vessel along the predefined trajectory towards the end stop, for thereby reducing a peak force on the neck mounts.

## Description

The invention relates to a truck comprising a vessel mount structure for mounting pressurized fuel tanks in general, in particular cylindrical carbon fibre hydrogen vessels that are suited for storing gaseous hydrogen up to levels of 350 to 700 bar or even more.

In Fuel Cell Electric Vehicles (FCEV), the fuel cell unit that generates electric power which is fed to an electro-mechanic motor that drives the wheels may be supplied with a fuel, such as hydrogen, which is stored in pressurized fuel tanks mounted on board of the vehicle. Alternatively, in vehicles that are propelled by a Hydrogen Internal Combustion Engine (H2-ICE) directly driving the wheels via a propeller shaft, the same on-board hydrogen storage with pressurized fuel tanks is needed. Such pressurized fuel tanks are typically big and heavy and may accordingly for packaging reasons need to be located in a position on the FCEV or H2-ICE vehicle where, in case of a collision with another vehicle or object, the likelihood of an impact is relatively high. For example, the pressurized fuel tanks may be mounted on a lateral side of the chassis, or between the cabin and the trailer, where they may be exposed to impact forces during an accident, being referred to as a so-called side impact collision with a vehicle that runs in from the side, more or less perpendicular to the longitudinal axis of the chassis.

For this reason, safety regulations such as R134 stipulate on these specific safety related accidents, by defining the provisions for approval of motor vehicles and their components with regard to safety related performance of hydrogen-fueled vehicles. Such provisions for example specify that damage to a chassis mounted fuel tank, e.g. due to a side impact, may not cause an unacceptable hazard. Specific requirement is that after such a side impact accident the pressurized hydrogen fuel tanks must stay connected to the vehicle structure and the complete hydrogen storage system, including all interconnecting pipework and valve systems, may be dislocated but must remain leakage-free intact (no leakage of hydrogen to the environment).

To avoid rupture of the tank, it is recommended to avoid high peak forces being exerted on the chassis mounted tanks. For example, high (radial) forces acting on the relatively weak boss ends of the tank may cause breaking out of the tank's (carbon fibre based) encapsulation material that maintains the shape of the pressurized fuel tank. For this reason, most tank suppliers advise to mount the tank to the chassis by a set of straps that clamp the tank around its robust cylindrical belly, the so-called "strap mounting", advantageously avoiding a collision load path via the relatively vulnerable metal boss end inserts in the spherical axial ends of the hydrogen vessels in case of a side impact crash from other vehicles.

However, the downside of such a strap mounting is that the tanks are mounted in an over-constrained fashion. That is, radial expansion of the tank ("breathing"), e.g. under impact of varying internal pressure, is constrained by the strap mounting, as well as torsional flex modes. Hence, during normal driving and operating conditions of the truck, such an over-constrained strap mounting may create internal stresses or friction between the tank and the mounts, which can lead to damage and may even cause the cylindrical tanks to slowly crawl away in longitudinal direction as a result of rotational micro-motions (like pulling a cork out of wine bottle with a corkscrew) that are continuously induced by small chassis torsional deformation angles (related to driving over road irregularities) of the fairly weak ladder frame as typically applied in commercial vehicles. A further disadvantage of strap mounting is that this fixation means consumes precious radial space that is limited by road clearance restraints and maximum chassis height. This reduces the maximum diameter of the pressurized tanks that can be installed at the sides of the chassis and thus less hydrogen can be stored in these strap mounted tanks, negatively affecting the driving range of these hydrogen vehicles.

It is an object of the present invention to provide a chassis mounting arrangement for a pressurized fuel tank that is safe, durable and reliable both during normal driving/operating conditions as well as during a collision, whilst maximizing the amount of hydrogen that can be carried in these pressurized fuel tanks, given the available packaging space.

### SUMMARY

In summary, aspects of the invention relate to a truck, comprising a vessel mount structure extending from a chassis of the truck. The vessel mount structure provides at least one neck mount that is mounted to an axial end of an elongated pressure vessel for thereby suspending the elongated pressure vessel to the chassis. The vessel mount structure comprises a support arms extending laterally from the or each neck mount towards the chassis. The or each support arm is coupled to the respective neck mount by a coupling arrangement, said coupling arrangement deformable (e.g. collapsible) in the lateral direction towards the vehicle, for guiding a movement of the respective neck mount relative to the support arm along a predefined trajectory. An end stop is provided on the chassis and spaced from the elongated pressure vessel, and arranged for abutting a cylindrical body section of the elongated pressure vessel, preferably at a location where the vessel wall is strong and robust to cope with high peak forces, in case of an impact on the elongated pressure vessel.

Accordingly, at least one axial end of the elongate pressure vessel is suspended by a neck mount that, via the deformable coupling arrangement, is coupled to a support arm that extends from the chassis. The other end of the pressure vessel may be suspended by a further neck mount, in which case the further neck mount is preferably coupled to a support arm via a further deformable coupling arrangement, e.g. similar to the deformable coupling arrangement described herein. E.g. at least one, or both of the neck mounts may comprise a deformable coupling arrangement comprising an assembly with two leg members that extend downward from the support arm and are spaced apart in lateral direction and that interconnect the neck mount to the support arm via a so-called "four bar mechanism" or "parallelogram construction" to guide the neck mount to the chassis via a predetermined path, or guided path, once the coupling arrangement deforms under side impact from a vehicle or object into the chassis sided tank.

Alternatively, at least one of the one or more coupling arrangements may be based on a flex plate assembly, e.g. comprising one or more flex plates, that are flexible in out-of-plane directions and rigid in at least two in-plane directions, but deformable in the guided path direction once a collapse or buckling threshold is exceeded under impact of the suspended pressure vessel by an external object (such as a passenger car from the side), and that hold the pressure vessel in position while allowing axial and radial expansion of the vessel due to internal pressure variations. It is therefore preferred that the out-of-plane stiffness of at least one of the one or more coupling arrangements is sufficiently high enough to keep the pressure vessel in a stable axial position fixated to the chassis. In other words, translation in the axial direction of the pressure vessel is preferably constrained by at least one of the coupling arrangements. To ensure that the guided path towards the end stop at the chassis is well defined, it is preferred that in case of a flex plate assembly type of coupling arrangement, the one or more flex plates have a geometry that comprises a rectangular central cut-out that defines upstanding guide members on opposing sides of the central cut-out that extend towards the support arm, and can act as a four-bar or parallelogram mechanism to allow the flex plate assembly to buckle and deform primarily in the in-plane direction towards the chassis end stop under impact of the pressure vessel from an external object. The flex plate assembly e.g. comprises a stack of multiple flex plates. A neck mount that comprises a flex plate assembly at one axial end of the pressure vessel can e.g. be favourably combined with a ball joint or cardanic coupling at the other axial end via a coupling arrangement according to aforementioned "parallelogram construction", to form a non-overconstrained suspension. The parallelogram construction is preferably construed such that it has a high bending stiffness in out-of-plane bending direction with the objective to tightly fixate the chassis sided tank in longitudinal direction of the truck whilst the flex plate assembly at the other end absorbs pressure dependent tank expansions and misalignments of the tank relative to the truck chassis.

Alternatively, the pressure vessel may be suspended by a neck mount with a deformable coupling arrangement at one axial end according to one of the described embodiments and/or claims of this patent document, combined with any other type of further suspension arrangement to suspend the remaining part of the pressure vessel, such as a strap mount around the cylindrical body of the vessel, or even a simple neck mounting based clamping arrangement at the other opposing axial end and that may be slidable in longitudinal direction of the tank.

In preferred embodiments, the vessel mount structure provides a pair of neck mounts that are mounted to opposing axial ends of the elongated pressure vessel, so that the elongated pressure vessel is suspended by its axial ends only. Accordingly, the elongated pressure vessel is suspended to the chassis by the neck mounts in a statically determined, i.e. non over-constrained, fashion that minimizes internal stresses in the pressure vessel, e.g. allowing "breathing" of the pressure vessel under varying pressure and temperature conditions. For this purpose these neck mounts may typically comprise a ball joint or flex plate allowing cardanic rotations in two or three orthogonal directions. Furthermore, at least one of the two neck mounts may further comprise axial sliding means for allowing axial displacement of the pressurized fuel tank with respect to the neck mounts to compensate for axial elongation or contraction of the tank, e.g. caused by varying internal pressure. The application of cardanic joints and axial sliding means can also be beneficial to compensate for relative displacements between the two support arms that occur as a result of chassis deformation (especially torsional) being induced by road load inputs. Such a preferred setup effectively avoids an over-constrained system and thus minimizes the risk of parasitic (fatigue) loads acting on the relatively vulnerable boss ends. As the suspension forces are concentrated near the opposing axial ends of the pressure vessel, e.g. provided by metal boss end inserts that are encapsulated in a carbon fibre vessel material with relatively little overlap, such a "neck mounting" is more fragile than a conventional "strap mounting" which fixates the tank in its robust cylindrical belly. Particularly with respect to an impact on the vessel, e.g. in case of a collision with another vehicle, these (radial) impact forces, typically directed in lateral direction of the chassis, e.g. acting on the boss end inserts, may become too high to avoid a rupture. Note that metal boss ends may be needed to facilitate providing an interface for interconnecting pipework and mounting of thermal pressure relieve devices which much remain fully intact after a side impact crash with another vehicle. Obviously, these critical interfaces may also need to be protected against mechanical overload which typically occurs during a (side) impact collision.

However, the present invention solves this by providing a deformable coupling arrangement. For example, the coupling arrangement is reinforced in a vertical direction and weakened in the lateral direction, to facilitate deformation along the predetermined (lateral) trajectory. For example, the coupling arrangement may be arranged for collapsing in the lateral direction when an impact force on the elongated pressure vessel exceeds a collapse threshold. In case of an impact, this allows the neck mounts to displace along the predefined trajectory while the coupling arrangement absorbs a portion of the impact energy. By guiding the elongated pressure vessel along the predefined trajectory towards the end stop, a peak force on the neck mounts is significantly reduced.

Additionally, the end stop abuts the relatively robust cylindrical wall of the pressure vessel to transfer the remaining impact energy into the chassis. Hence, the thus formed "crash structure" minimizes the radial load on the neck mounts, which is most critical as these forces support a break out moment with a tendency to damage the axial ends, e.g. by tearing out the encapsulated metal boss end inserts, of the (carbon fibre) pressure vessels. As a result the structural integrity of the neck mounts and corresponding axial ends of the vessel are protected in case of an impact on the pressure vessel.

In some embodiments, a buckle element extends laterally between each neck mount and the chassis, and each buckle element is arranged for buckling in response to the respective neck mount moving towards the chassis along the predefined trajectory. Beneficially, the buckling element improves the stability of the coupling arrangement along the weakened lateral direction during normal operating conditions of the truck. By buckling under impact, e.g. due to a collision, the buckle element absorbs a further portion of the impact energy before the elongated pressure vessel abuts the end stop.

The amount of impact energy that can be absorbed by the buckle element can be increased by the buckle element comprising a curved rod with a first end attached to the chassis, a second end attached to the respective neck mount, and a middle section therebetween, wherein the curved rod has a bending stiffness that is highest in the middle section and that (gradually) decreases towards the first and second ends. For example, the curved rod has a cross section that is largest in the middle section and that decreases towards the first and second ends, e.g. providing a "banana" shaped buckle element. The dimensions of the thus formed reinforced middle section can be tuned to increase or decrease the amount of impact energy absorbed by the rod as the neck mounts are displaced along the predefined trajectory, and the relatively weak axial ends of the rod prevent an over-constrained structure between the neck mounts and the chassis.

In some embodiments, the coupling arrangement comprises one or more guide members, e.g. legs extending along a vertical direction perpendicular to the lateral direction, wherein each guide member (or leg) has a first end attached to the support arm and a second end attached to the respective neck mount. The position of the first and second end of each guide member with respect to the neck mount and/or the support arm can be tuned, as well as its axial length, to define a desired predetermined trajectory for guiding the neck mount with respect to the support arm, e.g. an arc or a straight line.

For example, the coupling arrangement comprises a pair of guide members, each guide member extending separately from the other guide member between the neck mount and the support arm, for thereby forming a four-bar mechanism, preferably a parallelogram mechanism. In other words, the pair of guide members form two legs that extend side-by-side, e.g. parallel or at a relative angle to each other, between the neck mount and the support arm. Preferably, the guide members are of equal lengths, and preferably oriented in parallel to each other, to guide the neck mount along a substantially linear trajectory. Alternatively, the guide members are of inequal lengths and/or have a relative orientation angle with each other, e.g. non-parallel, to define a curved trajectory.

To reinforce the coupling in the vertical direction and weaken the coupling in the lateral direction, and to facilitate movement along the predefined trajectory, the coupling arrangement may provide a collapse structure that is collapsible in the lateral direction, wherein the collapse structure is arranged for collapsing when an impact force on the elongated pressure vessel exceeds a collapse threshold. In other words, the coupling arrangement may be substantially rigid in the lateral direction when a force lower than the collapse threshold is applied onto it, and substantially flexible in the lateral direction when said force exceeds the collapse threshold. For example, when the impact force exceeds the collapse threshold, the coupling arrangement may have a first stiffness in a vertical direction and a second stiffness in the lateral direction, wherein the first stiffness is larger than the second stiffness, preferably by a factor 3, more preferably by a factor 5. Note that via the proposed four-bar mechanism and more particularly the parallelogram solution, having its two guiding legs vertically positioned along or above the neck mount, this favourable distinct distribution between vertically stiff (to carry the static and dynamic loads of the heavy vessels under normal driving conditions) and laterally weak (to protect the relatively fragile axial boss ends of the pressure vessel during side impact car accidents) may be automatically provided by the construction.

Preferably, the coupling arrangement comprises plastically deformable hinges defined by one or more cut-outs or notches in the coupling arrangement. Such cut-outs or notches may also define one or more guide members that extend between the neck mount and the support arm. For example, the coupling arrangement is a plate element or rectangular tube that comprises a cut-out, defining a rectangular framework between the neck mount and the support arm, e.g. comprising a pair of guide members. The cut-out may score corners of the framework to locally weaken the pair of guide members, e.g. at axial ends thereof, to facilitate deformation of the coupling arrangement along the predefined trajectory.

The coupling arrangement may, together with the respective support arm and/or neck mount, be formed from a single part. For example, the support arm and/or the neck mount is formed to include the coupling arrangement, as a single piece.

Preferably, the coupling arrangement is arranged for guiding the neck mounts along the predefined trajectory over a stroke that is larger than a spacing between the elongated pressure vessel and the end stop, to ensure that the impact energy is transferred from the elongated pressure vessel into the chassis, instead of into the neck mounts.

To optimally absorb impact energy, the end stop may comprise a contact surface that is normal to the predefined trajectory. The contact surface can e.g. be provided on a tab that extends from the chassis along a vertical, e.g. downward, direction in a cantilevered fashion. Furthermore the tab may be weakened in the lateral direction for absorbing the impact along the predefined trajectory. Preferably, the contact surface is concave and has a radius of curvature that is equal to or larger than a radius of curvature of the cylindrical body section to increase the contact surface area between the elongated pressure vessel and the end stop, thereby avoiding peak stresses on the vessel. In addition, the contact surface on the tab where the vessel hits may be arranged with soft elastomeric cushion material to further reduce the peak stresses on the vessel during an end stop side impact hit.

As an example of a practical yet reliable embodiment of any coupling arrangement described herein, at least one of the one or more support arms may comprise a first rectangular tube extending from the chassis in the lateral direction, the coupling arrangement may comprise a second rectangular tube extending between the first rectangular tube and the neck mount in a vertical direction perpendicular to the lateral direction, wherein the second rectangular tube is collapsible in the lateral direction by a cut-out locally weakening the second rectangular tube.

Preferably, the chassis comprises a pair of cross beams that extend laterally between a pair of longitudinal chassis members, and at least one of the one or more support arms connects to the chassis at or near the pair of cross beams. By having an end of the support arm mounted at or near a location of the chassis cross beams the support arms are reinforced in the lateral direction, which contributes to the reliability of the coupling arrangement described herein.

### BRIEF DESCRIPTION OF THE DRAWINGS

The invention will be further elucidated in the figures:
FIG 1 illustrates an embodiment of a truck comprising elongated pressure vessels for storing pressurized fuel;
FIG 2 illustrates another embodiment of the truck, including a vessel mount structure for mounting the elongated pressure vessels to a chassis of the truck;
FIG 3 provides a detailed view of an embodiment of the vessel mount structure, in particular comprising a parallelogram mechanism;
FIG 4 illustrates a detailed view of another or further embodiment of the parallelogram mechanism based vessel mount structure;
FIG 5 shows a further 3D-view on the embodiment of FIG 4, having the parallelogram mechanism based mount vessel structure construed with two rigidly connected hollow rectangular tubes.

### DETAILED DESCRIPTION

As described above, aspects of the present invention provide a truck, comprising a vessel mount structure extending from a chassis of the truck. In preferred embodiments, the vessel mount structure provides neck mounts that are mounted to opposing axial ends of an elongated pressure vessel for thereby suspending the elongated pressure vessel to the chassis. The vessel mount structure comprises a pair of support arms extending laterally from a respective neck mount towards the chassis. Each support arm is coupled to the respective neck mount by a coupling arrangement, said coupling arrangement deformable (e.g. collapsible) in the lateral direction towards the vehicle, for guiding a movement of the respective neck mount relative to the support arm along a predefined trajectory, or guided path. Preferably, the coupling arrangement comprises one or more guide members, each guide member having a first end attached to the support arm and a second end attached to the respective neck mount. Hence, the guided path may be defined by the support arm. An end stop is provided on the chassis and spaced from the elongated pressure vessel, and arranged for abutting a cylindrical body section of the elongated pressure vessel, in case of an impact on the elongated pressure vessel.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

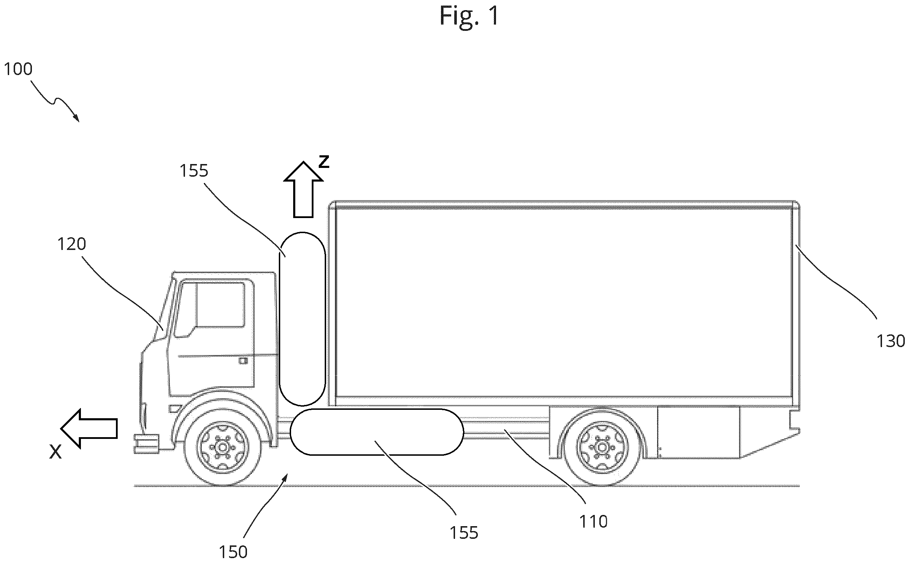

FIG 1 illustrates a truck 100, such as a tractor unit of a tractor semi-trailer combination, or a box truck, preferably a Fuel Cell Electric Vehicle (FCEV) powered by a (hydrogen) fuel cell unit or a vehicle powered by a Hydrogen Internal Combustion Engine (H2-ICE). Mounted to a chassis 110 of the truck 100 is a pressurized fuel storage 150 comprising one or more pressurized fuel tanks 155 for storing pressurized fuel, such as hydrogen. Preferably, the pressurized fuel tanks 155 are elongated pressure vessels. Such elongated pressure vessels may have a cylindrical body section between opposing spherical axial ends. Each axial end may be provided with a boss insert, which forms an inlet or outlet of the elongated pressure vessel, e.g. for connecting to a fuel supply line. A valve system may be provided at each axial end, e.g. integral to the boss insert, to regulate a flow of fuel into or out of the elongated pressure vessel and protect the vessel against temperature and pressure overloads. Hence, the axial ends of the pressurized fuel tank are relatively fragile compared to the thick cylindrical (carbon fibre) body section of the tank.

The pressurized fuel storage 150 can e.g. be arranged on one or both lateral sides of the chassis 110, such that the elongated pressure vessels 155 are located between the front and rear axle of the truck, the elongated pressure vessels oriented along a longitudinal direction X, e.g. the forward driving direction of the truck. Alternatively, or additionally, the pressurized fuel storage 150 may extend from the chassis 110 into the space between a cabin 120 and a trailer 130 of the truck, e.g. for suspending one or more elongated pressure vessels 155 on a rear side of the cabin 120, the elongated pressure vessels being oriented in a vertical direction Z, e.g. an upright direction, normal to the road surface and positioned at the outer side corners of the rear wall of the cabin.

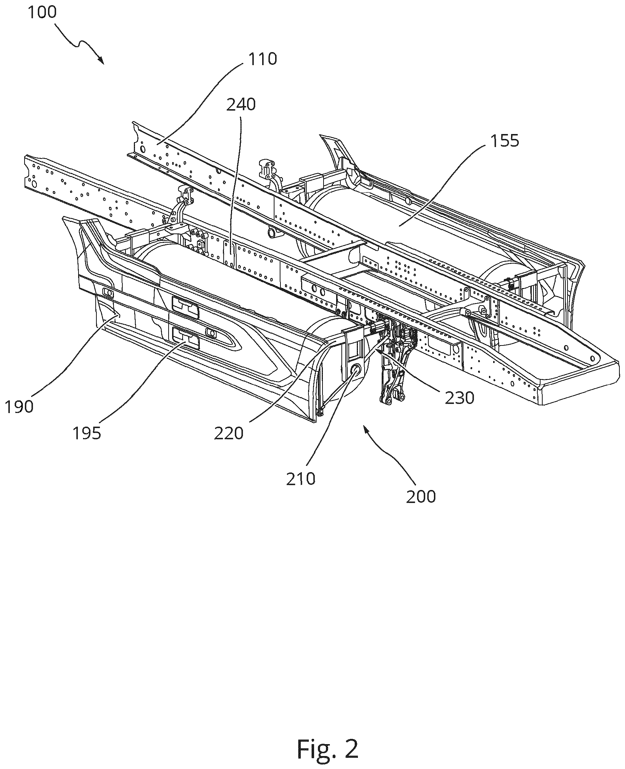

As illustrated in FIG 2, the truck 100 comprises a vessel mount structure 200 that extends from a chassis 110 of the truck, for suspending pressurized fuel tanks 155 to the chassis. The vessel mount structure 200 provides at least one neck mount 210, preferably a pair of neck mounts 210 that are mounted to the axial end(s) of the elongated pressure vessel 155 for suspending the elongated pressure vessel to the chassis, preferably at its axial ends only to minimize internal stresses. However, in accordance with the present invention the at least one neck mount 210 may alternatively be combined with a strap mount around the cylindrical body of the pressure vessel 155 that is designed with sufficient axial and radial compliance (e.g. via an enclosed elastomeric cushion and/or integration of tangentially acting steel coils springs) to absorb axial and radial pressure related expansions of the pressure vessel. Alternatively also a simple clamping arrangement, preferably with axial sliding means, at the cylindrical body or near or even in the opposing axial end of the elongated pressure vessel may be applied in combination with the at least one neck mount at the other end. The vessel mount structure 200 comprises a pair of support arms 220, each support arm extending laterally from a respective neck mount 210 towards the chassis 110. An optional side skirt 190 is mounted to the vessel mount structure 200 to cover the elongated pressure vessel 155 and to guide driving wind along the pressurized fuel storage. In the side skirt also steps 195 may be provided to allow persons to safely climb onto the so-called "catwalk" deck of the chassis 110 of a tractor. Hence, the support arms may need to be able to carry an additional load between 100 and 150 kg (e.g. of a person), in addition to carrying the load from the heavy pressure vessels, each typically weighing 300 to 500 kg.

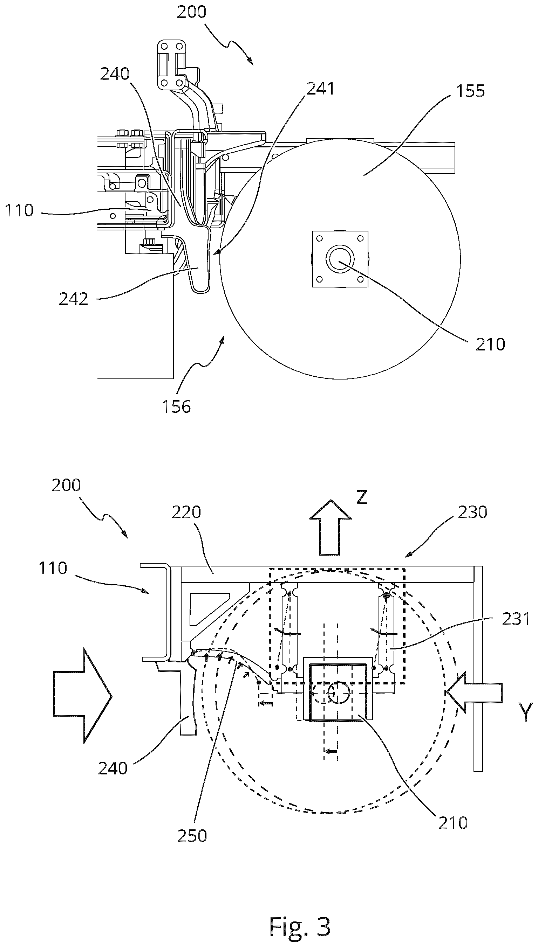

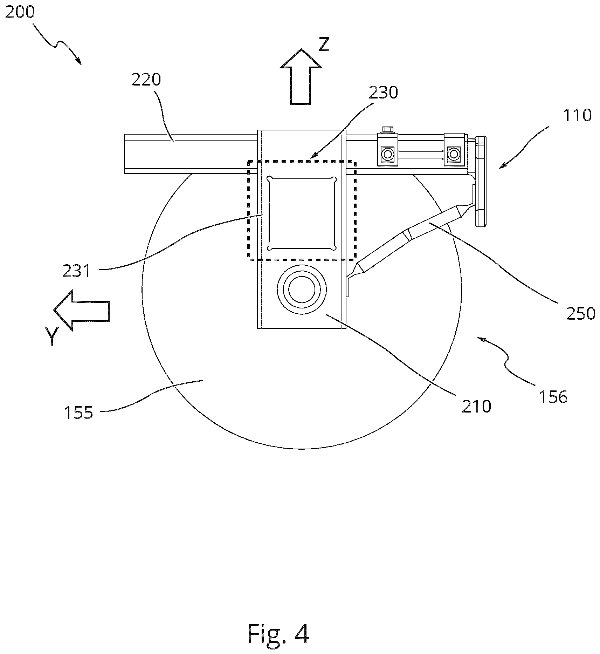

FIGs 3 and 4 illustrate various embodiments of the vessel mount structure 200 in more detail. Each support arm 220 is coupled to the respective neck mount 210 by a coupling 230, which is reinforced in the vertical direction Z and weakened in the lateral direction Y. In this way, the coupling arrangement 230 is deformable in the lateral direction Y for guiding a movement of the neck mount 210 relative to the support arm 220 along a predefined trajectory.

For example, the coupling arrangement 230 comprises one or more guide members 231, such as plates or rods, that extend between the neck mount 210 and the support arm 220. Axial end sections of the guide members 231 may be incised to locally decrease the cross section of the guide members, to facilitate bending of the guide members 231 near its axial ends. A middle section of the guide members 231 may be reinforced with respect to the axial end sections, in order to transfer forces between the neck mount 210 and the support arm 220 along the vertical direction Z, without buckling of the guide member 231.

In case the coupling 230 comprises only one guide member 231, the thus formed coupling arrangement 230 is arranged for guiding the neck mount 210 along a curved, e.g. circular, trajectory having a radius defined by the axial length of the guide member 231, without constraining an axial rotation of the neck mounts 210, e.g. around a centerline of the elongated pressure vessel 155.

As illustrated in FIGs 3 and 4, instead of a single guide member, the coupling 230 can comprise a pair of guide members 231 extending between the neck mount 210 and the support arm, thereby forming a four-bar mechanism, e.g. a parallelogram mechanism or trapezoid mechanism.

The axial lengths and (slanted) orientations of each link in such a four-bar mechanism can be tuned, in order to guide the neck mount 210 with respect to the support arm 220 along a specific trajectory, while also controlling the orientation of the neck mount 210 with respect to the support arm 220. For example, in a parallelogram mechanism, in which all axial link lengths are equal and its orientations are (vertically) parallel, the neck mount 210 follows a substantially linear (horizontal) trajectory and the orientation of the neck mount is constant during the movement along the trajectory. Conversely, in case of unequal axial link lengths and/or orientations, the trajectory may be curved and the neck mount may also rotate during its movement along the trajectory.

In FIG 4, the guide members 231 are formed by a cut-out in the coupling 231, that forms a framework between the support arm 220 and the neck mounts 210. The sides of the framework can be regarded as a four-bar mechanism, e.g. parallelogram mechanism. Plastically deformable hinges of the mechanism can be defined by the cut-out locally incising the guide members 231 at their axial ends.

Thus, the coupling or coupling arrangement 230 guides the neck mount 210 with respect to the support arm 220 along a predefined trajectory, that can e.g. be tuned by changing the relative dimensions of the guide members 231.

Preferably, to ensure that the neck mounts 210 are guided along the predefined trajectory, e.g. in case of an impact on the pressure vessel, the coupling arrangement 230 has a first stiffness in the vertical direction Z and a second stiffness in the lateral direction Y, wherein the first stiffness is larger than the second stiffness, preferably by a factor 3, more preferably by a factor 5 or more.

As depicted in FIG 3, the coupling arrangement 231 is arranged for guiding the neck mount 210 towards an end stop 240 that is provided on the chassis 110 and spaced from the elongated pressure vessel 155. The end stop 240 is arranged for abutting a cylindrical body section of the elongated pressure vessel 155 between the axial ends. Preferably, a contact surface 241 of the end stop 240 is in line with, e.g. normal to, the predefined trajectory. The contact surface 241 may be concave, having a radius of curvature that is at least equal to a radius of curvature of the cylindrical body section 156 of the elongated pressure vessel 155, to distribute impact energy over the contact surface 241 and prevent peak forces between the pressure vessel 155 and the end stop 240. Furthermore, elastomeric cushion material may be added to the contact surface 241 to dampen the impact of a vessel end stop hit during a side impact collision.

Since the predefined trajectory can be offset from the chassis 110, e.g. passing below the chassis, the contact surface 241 can be provided on a tab 242 that extends from the chassis 110 along the vertical direction Z, e.g. downward, in a cantilevered fashion. By providing the tab 242 with a flexibility in the lateral direction Y, along the predefined trajectory, impact energy can be absorbed by deformation of the tab 242 when the elongated pressure vessel 155 collides into the end stop 240.

In case of an impact on the elongated pressure vessel 155, the coupling arrangement 230 thus guides the elongated pressure vessel 155 along the predefined trajectory towards the end stop 240. The impact causes a deformation of the coupling arrangement, which deformation guides the neck mounts 210 along the predefined trajectory while absorbing a part of the impact energy. This reduces a peak force on the neck mounts 210, e.g. in case of a collision. After having moved a certain distance along the predefined trajectory, the elongated pressure vessel's cylindrical body section 156 collides into the end stop 240, and the remaining part of the impact energy is absorbed by the end stop 240 and the cylindrical body section 156 of the pressure vessel, thereby further mitigating the amount of impact energy exerted on the neck mounts 210.

It is preferable that the coupling arrangement 230 is arranged for guiding the neck mounts 210 along the predefined trajectory over a stroke that is larger than a spacing S between the elongated pressure vessel 155 and the end stop 240, to ensure that the impact energy is absorbed by the end stop 240 and the cylindrical body 156 of the pressure vessel, instead of by the neck mounts 210.

Optionally, as illustrated in FIGs 3 and 4, a buckle element 250 extends laterally between each neck mount 210 and the chassis 110, e.g. substantially perpendicular to the guide members 231 of the coupling arrangement 230. The buckle element 250 is arranged for buckling in response to the respective neck mount 210 moving along the predefined trajectory towards the chassis 110, thereby absorbing a further part of the impact energy until the elongated pressure vessel's cylindrical body 156 collides into the end stop 240.

The buckle element 250 may comprise a curved or angled rod, or plate, that has a first end attached to the chassis 110 and a second end attached to the neck mount 210. A slightly curved or angled rod section may cause an axial force on the rod to be converted into bending stresses, which provokes buckling of the element 250. Preferably, the curved rod or plate has a bending stiffness that is highest in a middle section of the rod and that decreases towards the first and second ends of the rod, in order to absorb a substantial amount of impact energy before buckling. For example, a cross section of the curved or angled rod (or plate) is largest in the middle section and decreases towards the ends, e.g. providing the buckling element 250 with a "banana shape".

As illustrated in FIGs 3 and 4, the neck mount 210, the coupling arrangement 230 and the buckle element 250 can be integral to the support arm 220, e.g. formed as a single part. Alternatively, the coupling arrangement 230 and/or the buckle element 250 can comprise one or more separate parts that are mounted between the neck mount 210, the support arm 220 and the chassis 110.

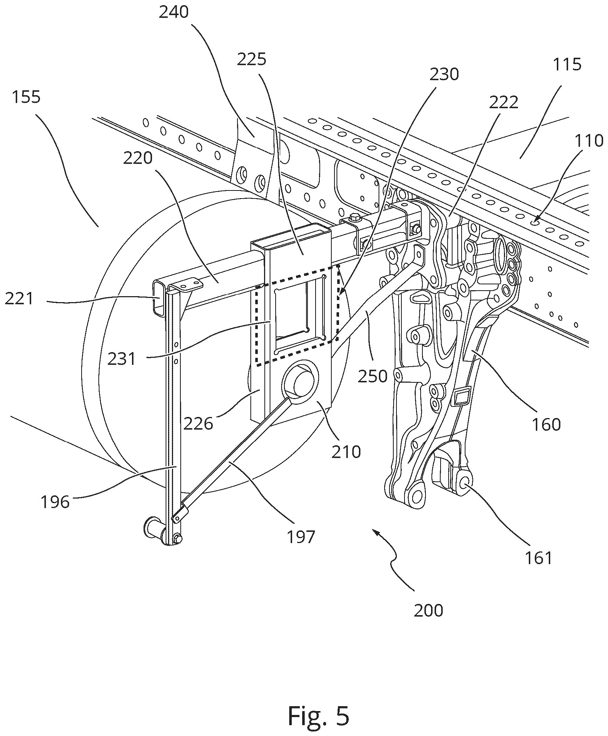

More particularly FIG 5 shows an exemplary vessel mount structure 200 with a coupling arrangement 230 that is construed by two rigidly connected perpendicularly positioned hollow rectangular tubes. The first rectangular tube 221 provides the actual support arm 220. The second rectangular tube 225 is perpendicularly shifted over and rigidly fixed to (e.g. via welding) the first rectangular tube 221 which has a slightly smaller cross section. The first tube 221 is bolted to the chassis 110 via a casted bracket 222 in the close vicinity of the rear axle chassis cross member 115 and reaction rod bracket 160 that provides the attachment points 161 for the lower torque rods that guide the rear axle up and down (not shown in the figure).

This configuration consequently results in a stable and durable foundation for carrying vertical loads (statically and dynamically) from the big and heavy hydrogen tanks. Note that strap mounting in the belly of the carbon fibre hydrogen tanks would require additional (non-optimal) chassis reinforcements or cross members at location of the strap fixations. As illustrated, the first tube 221 may have an uninterrupted rectangular cross-section to consequently be stiff and strong in bending and torsional directions, which makes this geometry ideal as lightweight construction to cope with the dynamic inertia loads of the big heavy chassis sided tanks.

The second tube 225 may provide the structure for the coupling arrangement 230 via a cut-out framework as discussed with reference to FIG 4. Furthermore, it can facilitate the mechanical casing for integrating the neck mount 210 joint. The advantage of this fairly simple hollow rectangular tube arrangement is that the cut-out framework for provision of a parallelogram mechanism with flexible hinges is construed such that the side planes 226 (in X-Z direction) of the second rectangular tube 225 have a substantial dimension in X-direction which is important to stiffly withstand the longitudinal dynamic loads that are acting in axial direction on the heavy hydrogen vessel 155. These longitudinal forces need also be transmitted to the chassis by the neck mount 210 in a stable manner. The vertical distance of the centre of the neck mount 210 below the tube 221 determine the arm on which the longitudinal inertia force of the vessel act. The corresponding torsion moment acting on the first tube 221 is stiffly carried by its uninterrupted rectangular hollow structure. Due to the fact that the side walls 226, that effectively represent the actual guiding members 231, may not significantly contribute to bending resistance in lateral Y-direction in the area where the cut-out framework is provided a vessel mount structure is realized that is softly suspended in lateral Y direction, whilst the rigidity in X- and Z-direction is relatively stiff. Consequently the eigenfrequencies of the hydrogen tank in vertical and longitudinal direction can be designed well above the eigenfrequency of the rear axle wheel hop mode (unsprung mass) that is typically situated in the 10 to 12 Hz frequency region. Having such a bracket system arrangement for carrying the chassis sided hydrogen is good for improving ride comfort and avoiding durability problems of the chassis 110.

FIG 5 indicates two further members 196 and 197 which may be added to the vessel mount structure 200 for effectively supporting a side skirt 190 as indicated in FIG 2. These additional members are being connected to the support arm 220 and coupling arrangement 231 to support the loads acting on the side skirt. Specifically, the diagonally placed slender bar 197, providing a connection between the lower side of the side skirt and the neck mount 210, can be a very effective low weight and low cost measure to increase the stability of the side skirt support whilst a person is climbing on the catwalk via the side skirt integrated steps 195 (as indicated in FIG 2). Important to note is that this construction is not hindering the functionality of the deformable (collapse) structure of the parallelogram mechanism based coupling arrangement 231 since the slender bar is mainly stiff and supportive in its diagonal orientation. This side skirt support construction is being further enhanced by a buckle rod 250, e.g. extending in line with the diagonal side skirt support member 197, and making the connection between the neck mount and the chassis 110 via casted bracket 222. This helps to optimise the stability of the overall bracket system in a simple straight forward manner and can be tuned to the exact desired level of protecting the boss ends inserts of the carbon fibre hydrogen tanks during a side impact collision with another vehicle.

The invention applies not only to commercial vehicle applications where the pressurized fuel tank mounting arrangement described herein reduces a peak load on the neck mounts in case of a collision, but also to other technical, agricultural or industrial applications where the integrity and safety of a suspended component may be compromised due to an impact. It will be clear to the skilled person that the invention is not limited to any embodiment herein described and that modifications are possible which may be considered within the scope of the appended claims. Also kinematic inversions are considered inherently disclosed and can be within the scope of the invention. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean `at least one', and do not exclude a plurality. Features that are not specifically or explicitly described or claimed may additionally be included in the structure of the invention without departing from its scope.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A truck, comprising a vessel mount structure extending from a chassis of the truck, the vessel mount structure provides at least one neck mount that is mounted to an axial end of an elongated pressure vessel for thereby suspending the elongated pressure vessel to the chassis, wherein the vessel mount structure comprises a support arm extending laterally from the or each neck mount towards the chassis, wherein the or each support arm is coupled to the respective neck mount by a coupling arrangement, said coupling arrangement deformable in the lateral direction towards the vehicle, for guiding a movement of the respective neck mount relative to the support arm along a predefined trajectory, wherein an end stop is provided on the chassis and spaced from the elongated pressure vessel, and arranged for abutting a cylindrical body section of the elongated pressure vessel, in case of an impact on the elongated pressure vessel.

2. The truck according to claim 1, wherein the coupling arrangement comprises one or more guide members, each guide member having a first end attached to the support arm and a second end attached to the respective neck mount.

3. The truck according to any preceding claim, wherein the coupling arrangement comprises a pair of guide members, each guide member extending separately from the other guide member between the neck mount and the support arm, for thereby forming a four-bar mechanism.

4. The truck according to claim 3, wherein the pair of guide members form a parallelogram mechanism, wherein the pair of guide members are parallel to each other and are of equal length.

5. The truck according to any preceding claim, wherein the coupling arrangement is arranged for guiding the neck mounts along the predefined trajectory over a stroke that is larger than a spacing between the elongated pressure vessel and the end stop.

6. The truck according to any preceding claim, wherein the coupling arrangement provides a collapse structure that is collapsible in the lateral direction, wherein the collapse structure is arranged for collapsing when an impact force on the elongated pressure vessel exceeds a collapse threshold.

7. The truck according to any preceding claim, wherein the coupling arrangement comprises plastically deformable hinges.

8. The truck according to any preceding claim, wherein the coupling arrangement together with the respective support arm and/or neck mount are formed from a single part.

9. The truck according to any preceding claim, wherein a buckle element extends laterally between at least one neck mount and the chassis, wherein the buckle element is arranged for buckling in response to the respective neck mount moving towards the chassis along the predefined trajectory.

10. The truck according to claim 9, wherein the buckle element comprises a curved rod with a first end attached to the chassis, a second end attached to the respective neck mount, and a middle section therebetween, wherein the curved rod has a bending stiffness that is highest in the middle section and that decreases towards the first and second ends.

11. The truck according to any preceding claim, wherein the end stop comprises a contact surface that is normal to the predefined trajectory.

12. The truck according to claim 11, wherein the contact surface is provided on a tab that extends from the chassis along a vertical direction in a cantilevered fashion.

13. The truck according to claim 11 or 12, wherein the contact surface is concave and has a radius of curvature that is equal to or larger than a radius of curvature of the cylindrical body section.

14. The truck according to any preceding claim, wherein at least one of the one or more support arms comprises a first rectangular tube extending from the chassis in the lateral direction, wherein the coupling arrangement comprises a second rectangular tube extending between the first rectangular tube and the neck mount in a vertical direction perpendicular to the lateral direction, and wherein the second rectangular tube is collapsible in the lateral direction by a cut-out locally weakening the second rectangular tube.

15. The truck according to any preceding claim, wherein the chassis comprises a pair of cross beams that extend laterally between a pair of longitudinal chassis members, and wherein at least one of the one or more support arms connects to the chassis at or near the pair of cross beams.
